# EUROPÄISCHE PATENTANMELDUNG

(11) **EP 2 955 393 A1**
(43) Veröffentlichungstag der Anmeldung: **16.12.2015**
(21) Anmeldenummer: 14172266.0
(22) Anmeldetag: 13.06.2014
(51) Int. Cl.: F16B 5/02, F16L 3/237, F16L 55/035

(54) **Verbindungsschelle mit Metalldrahtmatte als Dämpfungselement**

(71) Anmelder: Siemens Aktiengesellschaft, 80333 München (DE)
(72) Erfinder: Grieb, Thomas, 47802 Krefeld (DE); Prade, Bernd, 45479 Mülheim (DE)

(57) **Zusammenfassung**

Die Erfindung betrifft eine Verbindungsschelle (1) zur Verbindung zweier Rohrleitungen (5, 6), umfassend einen ersten Schellenarm (11), welcher dazu ausgebildet ist, wenigstens teilweise um einen Umfang einer ersten Rohrleitung (5) zu verlaufen, und einen zweiten Schellenarm (12), welcher dazu ausgebildet ist, wenigstens teilweise um einen Umfang einer zweiten Rohrleitung (6) zu verlaufen, wobei der erste und zweite Schellenarm (5,6) gedämpft miteinander verbunden sind, und als Dämpfungselement (20) wenigstens eine Metalldrahtmatte vorgesehen ist.

## Beschreibung

Bei dem Betrieb von strömungstechnischen Anlagen, welche eine Anzahl an Rohrleitungen umfassen, kommt es mitunter zu Schwingungsbewegungen der Rohrleitungen aufgrund der sich verändernden Druckverhältnisse innerhalb dieser. Zudem können auch Kräfte zu diesen Bewegungen beitragen bzw. diese Bewegungen auch veranlassen, welche von außen der Anlage aufgeprägt werden oder durch andere Komponenten der Anlage erzeugt werden und damit dazu beitragen, die Rohrleitungen in Schwingung zu versetzen. Aufgrund der Bewegungen können sich nicht nur Schäden an den Rohrleitungen selbst ergeben, sondern es können sich bspw. auch Resonanzschwingungen aufbauen, welche zu größeren Schäden an der gesamten Anlage führen können. Bei dem Betrieb von Gasturbinen kommt es bspw. zu derartigen Schwingungsbewegungen in den Rohrleitungen der externen Brennstoffzufuhr. Die Schwingungsbewegungen können hierbei etwa die Schweißnähte an den Rohrleitungen, z.B. die Schweißnähte zwischen Winkelstücken und dem Brennerflansch, beschädigen. Kommt es zu einem Versagen der Schweißnähte, ist mitunter das Abschalten der gesamten Gasturbine erforderlich, welches hohe Stillstandkosten zur Folge hat.

Um die Schwingungsbewegungen in derartigen Rohrleitungen zu vermindern, werden typischerweise Rohrschellen eingesetzt, welche eine Anzahl an Rohrleitungen miteinander verbinden. Zwischen den Rohrschellen und den Rohrleitungen wird bspw. ein Dämpfungsmaterial vorgesehen, welches zu einer Verschiebung der auftretenden Schwingungsfrequenzen führt und zu einer vorteilhaften Überlagerung bzw. Kopplung der Bewegungen einzelner Rohrleitungen. Aufgrund der Dämpfung mittels des Dämpfungselementes können zudem ungewünschte Bewegungen, insbesondere Resonanzen deutlich abgemildert werden, da Schwingungsenergie gezielt in andere Energieformen umgesetzt werden kann.

Als Dämpfungselemente werden etwa bei Brennstoffrohrleitungen einer Gasturbine Silikonmaterialien eingesetzt, die bis zu einer Temperatur von etwa 325 °C temperaturbeständig sind. Da jedoch bei Betrieb einer Gasturbine die betreffenden Rohrleitungen mitunter diesen Temperaturbereich erreichen und sogar noch übersteigen, besteht die Gefahr des Versagens des Silikonmaterials.

Insofern ist es vorliegend Aufgabe der Erfindung, eine geeignete Verbindungsschelle vorzuschlagen, welche auch bei höheren Temperaturen, insbesondere bei 325 °C und darüber ohne Materialversagen eingesetzt werden kann. Gleichzeitig soll die Verbindungsschelle eine ausreichende Dämpfung der Bewegungen der Rohrleitungen ermöglichen, so dass die Rohrleitungen sicher genutzt werden können.

Diese der Erfindung zugrundeliegende Aufgabe wird gelöst durch eine Verbindungsschelle gemäß Anspruch 1 sowie durch ein Rohrsystem gemäß Anspruch 6, ein Brennstoffrohrsystem gemäß Anspruch 10 sowie eine Gasturbine gemäß Anspruch 11.

Insbesondere werden die der Erfindung zugrundeliegenden Aufgaben gelöst durch eine Verbindungsschelle zur Verbindung zweier Rohrleitungen, umfassend einen ersten Schellenarm, welcher dazu ausgebildet ist, wenigstens teilweise um einen Umfang einer ersten Rohrleitung zu verlaufen, und einen zweiten Schellenarm, welcher dazu ausgebildet ist, wenigstens teilweise um einen Umfang einer zweiten Rohrleitung zu verlaufen, wobei der erste und zweite Schellenarm gedämpft miteinander verbunden sind, und als Dämpfungselement wenigstens eine Metalldrahtplatte vorgesehen ist.

Weiterhin werden die der Erfindung zugrundeliegenden Aufgaben gelöst durch ein Rohrsystem umfassend wenigstens eine erste Rohrleitung und eine zweite Rohrleitung, welche beide mittels einer Verbindungsschelle gemäß der vorangehenden wie auch nachfolgenden Beschreibung verbunden sind.

Überdies werden die der Erfindung zugrundeliegenden Aufgaben gelöst durch ein Brennstoffrohrsystem einer Gasturbinenanlage umfassend wenigstens eine erste Rohrleitung zur Beförderung von Brennstoff und eine zweite Rohrleitung zur Beförderung von Brennstoff, welche beide mittels einer Verbindungsschelle wie vorab und nachfolgend beschrieben, verbunden sind.

Ebenso werden die der Erfindung zugrundeliegenden Aufgaben gelöst durch eine Gasturbine umfassend ein solches Brennstoffrohrsystem.

Die grundlegende Erfindungsidee ist darin zu sehen, dass zwei Schellenarme einer Verbindungsschelle miteinander gedämpft verbunden sind, wobei als Dämpfungselement eine Metalldrahtmatte vorgesehen ist. Die Metalldrahtmatte besteht hierbei typischerweise aus einem Gewirr einzelner verschlungener Metalldrähte, wobei die Metalldrahtmatte bei entsprechender Kraftbeaufschlagung zu einer Reibung einzelner Drähte in dem Verbund Anlass gibt. Das Gewirr kann natürlich auch durch eine textile Struktur beliebiger Art ersetzt sein, soweit diese bei Kraftbeaufschlagung eine entsprechende Dämpfung durch Reibung einzelner Drähte verursacht. Diese Reibung führt zu einem energetischen Verlust, welcher mechanische Energie in Wärmeenergie umsetzt. Insofern eignet sich die Metalldrahtmatte bei Kraftbeaufschlagung auch bei hohen Temperaturen eine derartige Energieumsetzung zu vollführen. Werden also die durch die Verbindungsschelle verbundenen Rohrleitungen etwa bei Druckschwankungen des Betriebsmittels in den Rohrleitungen zu Schwingungsbewegungen angeregt, können diese Bewegungen nach Einleitung einer Schwingungskraft in die Metalldrahtmatte gedämpft werden. Da die Metalldrahtmatte auch bei hohen Temperaturen thermisch stabil vorliegt, kann eine derartige Schwingungsdämpfung auch bei hohen Temperaturen, insbesondere auch bei Temperaturen von über 325 °C erreicht werden.

An dieser Stelle soll darauf hingewiesen werden, dass die Dämpfung im erfindungsgemäßen Sinne als mechanische Dämpfung in Bezug auf eine Bewegung der beiden Schellenarme bzw. Rohrleitungen gegeneinander zu verstehen ist. In anderen Worten wird bei Bewegung der beiden Schellenarme wenigstens ein Teil der Bewegungsenergie in thermische Wärme durch Reibung umgesetzt, so dass bei Bewegung der beiden Schellenarme bzw. Rohrleitungen eine mechanische Dämpfung erfolgen kann.

Weiterhin sei darauf hingewiesen, dass eine Verbindung im erfindungsgemäßen Sinn nicht die Halterung der beiden Rohrleitungen in der Verbindungsschelle erfordert, sondern eine reine materialtechnische Verbindung bereits ausreichend ist. So können die beiden Rohrleitungen bspw. auch durch die Verbindungsschelle miteinander verspannt sein. Bevorzugt sind die beiden Rohrleitungen mit den beiden Schellenarmen in direktem Kontakt, so dass eine kraftschlüssige Übertragung von Schwingungsenergie aus den Rohrleitungen in die Schellenarme erfolgen kann. Zudem sind die Schellenarme bevorzugt aus metallischem Material, da dieses ebenfalls gegenüber thermisch anspruchsvollen Anwendungen stabil vorliegen kann.

Gemäß einer ersten besonders bevorzugten Ausführungsform der Erfindung ist vorgesehen, dass der erste Schellenarm dazu ausgebildet ist, um mehr als die Hälfte des Umfangs der ersten Rohrleitung zu verlaufen und/oder der zweite Schellenarm dazu ausgebildet ist, um mehr als die Hälfte des Umfangs der zweiten Rohrleitung zu verlaufen. Das Verlaufen in Umfangsrichtung erfordert hierbei eine geeignete Nachbildung der Umfangsfläche der Rohrleitungen, so dass die Rohre praktisch in dem Schellenarm gehaltert werden können, ohne weiterer Vorrichtungen zu bedürfen. Aufgrund des Verlaufs um mehr als die Hälfte des Umfangs der jeweiligen Rohrleitung kann diese in den jeweiligen Schellenarm gehaltert werden, ohne aus der Halterung unter Abwesenheit einer mechanischen Kraftbeaufschlagung heraus zu rutschen. Folglich liegt ein effektiver Halterungsmechanismus vor.

Gemäß einer weiteren bevorzugten Ausführungsform der Erfindung ist vorgesehen, dass der erste Schellenarm im Bereich eines Schellenarmendes mit dem zweiten Schellenarm ebenfalls im Bereich eines Schellenarmendes verbunden ist, wobei die beiden anderen Schellenarmenden der beiden Schellenarme miteinander unverbunden vorliegen. Die Schellenarmenden beziehen sich hierbei auf die Enden der Schellenarme in Längsverlaufsrichtung eines Materialverlaufs von diesen. Insbesondere können die beiden verbundenen Schellenarme zudem einen Abschnitt aufweisen, welcher in verbundener Form im Wesentlichen parallel zu der Oberfläche des Dämpfungselementes verläuft, so dass die Kraftübertragung während des Betriebs auf eine größere Fläche des Dämpfungselementes erfolgt. Weiterhin haltern insbesondere die beiden unverbundenen Schellenarmenden jeweils eine Rohrleitung. Eine Verbindung lediglich in einem Bereich, in welchem die beiden Schellenarmenden unterschiedlicher Schellenarme miteinander verbunden sind, verringert den Materialaufwand und erleichtert eine leichtere Wartung, da die Anordnung des Verbindungsbereiches in einem zugänglichen Bereich der Rohrleitungen vorgenommen werden kann.

Gemäß einer alternativen Ausführungsform der Erfindung ist vorgesehen, dass der erste Schellenarm im Bereich eines Schellenarmendes mit dem zweiten Schellenarm ebenfalls im Bereich eines Schellenarmendes verbunden ist, wobei die beiden anderen Schellenarmenden der beiden Schellenarme miteinander in eine lösbare Hakverbindung gebracht sein können. In anderen Worten können die beiden anderen Schellenarmenden miteinander lösbar verhakt werden. Die Hakverbindung ist insbesondere materialschlüssig, d.h. die Materialien oder beide Schellenarme berühren sich materialschlüssig.

Die Hakverbindung kann weiterhin derart ausgebildet sein, dass die beiden verhakten Schellenarmenden gegenpassende Umbördelungen aufweisen, welche nach Verhakung ineinander greifen, und so die beiden Schellenarmenden aneinander befestigen können. Die zusätzliche Hakverbindung an den jeweils einander zugeordneten Schellenarmenden stellen eine zusätzlich Befestigungsmöglichkeit bereit, mittels welcher die beiden Rohrleitungen nochmals verbessert miteinander verbunden werden können. Aufgrund der Lösbarkeit der Hakverbindung kann diese auch bei Bedarf relativ schnell wieder gelöst werden, so dass etwa ein Austausch der Verbindungsschelle, wenn notwendig, leicht erfolgen kann.

Gemäß einer weiteren Ausbildungsvariante, kann der erste Schellenarm im Bereich eines Schellenarmendes mit dem zweiten Schellenarm ebenfalls im Bereich eines Schellenarmendes verbunden sein, wobei die beiden anderen Schellenarmenden der beiden Schellenarme ebenfalls gedämpft miteinander verbunden sind, und als Dämpfungselement wenigstens eine Metalldrahtmatte, insbesondere eine weitere Metalldrahtmatte vorgesehen ist. Eine beidseitig gedämpfte Verbindung der Schellenarmenden kann eine verbesserte Dämpfungswirkung gewährleisten im Vergleich zu einer Ausführungsform, bei welcher lediglich eines der Schellenarmenden nur mit einer Dämpfung versehen ist.

Weiterhin ist vorgesehen, dass der erste Schellenarm im Bereich des einen Schellenarmendes mit dem zweiten Schellenarm ebenfalls im Bereich des einen Schellenarmendes derart verbunden ist, dass die beiden Schellenarme wenigstens bereichsweise mittelbar über das Dämpfungselement miteinander verbunden vorliegen. Die beiden Schellenarme werden also bei Bewegung der jeweiligen Rohrleitungen die Bewegungsenergie stets in das Dämpfungselement direkt einleiten, wo die mechanische Dämpfung erfolgen kann.

Gemäß einer Weiterbildung dieser Ausführungsform ist vorgesehen, dass die beiden verbundenen Schellenarmenden eine Aussparung aufweisen, durch welche ein Haltestift zur Verbindung beider verläuft. Der Haltestift kann derart mit den beiden Schellenarmenden verbunden sein, dass diese weiterhin ein Bewegungsspiel aufweisen, wobei die Bewegung innerhalb des Spiels von dem Dämpfungselement gedämpft ist. Zudem sorgt der Haltestift für eine sichere Verbindung der beiden Schellenarme, so dass auch bei großen Schwingungsamplituden eine effektive Dämpfung erfolgen kann. Alternativ zu einer solchen Ausführungsform kann natürlich auch der Haltestift an einem Schellenarmende fest abgebracht sein, so dass dieser keine entsprechende Aussparung aufweisen muss.
Gemäß einer darüber hinausgehenden Weiterbildung der Erfindung kann das Dämpfungselement ebenfalls ein Loch aufweisen, durch welches der Haltestift verläuft. Insofern kann gewährleistet werden, dass das Dämpfungselement nicht aus der Verbindungsschelle unbeabsichtigt herausfallen kann und die Verbindungsschelle infolgedessen nur noch eine ungenügende bzw. keine Dämpfung mehr ausführen kann.

Gemäß einer weiteren Ausführungsform kann der Haltestift als Gewindestift ausgebildet sein, welcher mit den beiden Schellenarmenden verspannt ist bzw. verspannt werden kann. Eine Verspannung kann etwa so erfolgen, dass die Gewindestiftenden mit jeweils einer Mutter verschraubt werden, bis die beiden Schellenarmenden unter Verspannung vorliegen. Der Gewindestift erlaubt folglich eine besonders einfache, kostengünstige und leicht zu wartende Ausführungsform des Haltestifts.

Ebenso ist es gemäß einer alternativen Ausführungsform denkbar, dass der Haltestift als Schraube ausgebildet ist. Eine solche kann etwa lose durch die Aussparungen der beiden Schellenarme geführt sein, oder aber auch an einem Schellenarm bereits befestigt, etwa angeschweißt oder mit dem Schellenarm verpresst sein. Nach entsprechender Anbringung der Verbindungsschelle an einem Rohrsystem kann etwa die Schraube dazu dienen, die Verbindungsschelle und das Rohrsystem miteinander zu verspannen. Um die Einführung einer fest mit einem Schellenarm verbundenen Schraube in die Aussparung des anderen Schellenarms zu unterstützen, kann die Aussparung des anderen Schellenarms auch als Schlitz ausgebildet sein.

Nachfolgend soll die Erfindung anhand einzelner Figuren im Detail näher erläutert werden. Hierbei sei darauf hingewiesen, dass die technischen Merkmale in den Figuren, welche mit gleichen Bezugszeichen versehen sind, gleiche technische Wirkungen aufweisen sollen.

Weiterhin ist darauf hinzuweisen, dass die Figuren lediglich schematisch zu verstehen sind und keine Einschränkung hinsichtlich der Ausführbarkeit der Erfindung erlauben.

Darüber hinaus sei darauf hingewiesen, dass die Erfindung in ihrer Gesamtheit mit einer beliebigen Kombination der nachfolgend dargestellten technischen Merkmale beansprucht werden soll, soweit die sich ergebende Ausführungsform die der Erfindung zugrundeliegende Aufgabe lösen kann.

Hierbei zeigen:
- Figur 1: eine perspektivische Ansicht auf eine erste Ausführungsform des erfindungsgemäßen Rohrsystems bzw. Brennstoffrohrsystems umfassend eine erste Ausführungsform einer erfindungsgemäßen Verbindungschelle;
- Figur 2: eine seitliche Schnittansicht durch die in Figur 1 gezeigte Ausführungsform des erfindungsgemäßen Rohrsystems bzw. Brennstoffrohrsystems;
- Figur 3: eine perspektivische Seitenansicht auf eine weitere Ausführungsform eines erfindungsgemäßen Rohrsystems bzw. Brennstoffrohrsystems umfassend eine Ausführungsform einer erfindungsgemäßen Verbindungsschelle;
- Figur 4: eine seitliche Schnittansicht durch die in Figur 3 gezeigte Ausführungsform des erfindungsgemäßen Rohrsystems bzw. Brennstoffrohrsystems.

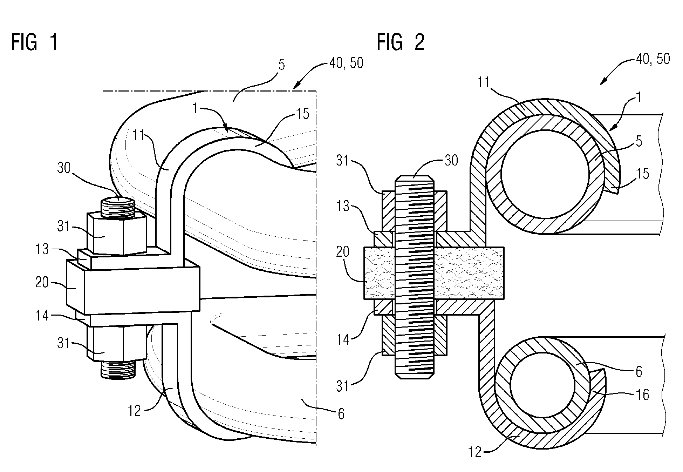

Figur 1 zeigt eine erste Ausführungsform des erfindungsgemäßen Rohrsystems 40 bzw. Brennstoffrohrsystems 50, welches eine Ausführungsform der erfindungsgemäßen Verbindungsschelle 1 aufweist. Das Brennstoffrohrsystem 50 kann auch ein Teil einer nicht weiter gezeigten Gasturbine sein. Die Verbindungsschelle 1 weist hierbei einen ersten Schellenarm 11 sowie einen zweiten Schellenarm 12 auf, die jeweils eine erste Rohrleitung 5 bzw. eine zweite Rohrleitung 6 umfassen. Zur Verbindung der beiden Schellenarme 11, 12 ist an einem Schellenarmende 13 des ersten Schellenarms 11 sowie an einem Schellenarmende 14 des zweiten Schellenarms 12, eine Verbindung mittels eines Haltestifts 30 vorgesehen. Die jeweiligen Schellenarmenden 13, 14 weisen eine geeignete Aussparung auf, durch welche der als Gewindestift ausgeführte Haltestift 30 geführt ist. Gleichzeitig ist zwischen den beiden Schellenarmenden 13, 14 ein Dämpfungselement 20 angeordnet, welches als Metalldrahtmatte ausgebildet ist. Zum Verspannen der beiden Schellenarme miteinander, ist jeweils endständig an dem Haltestift 30 eine Mutter 31 derart aufgeschraubt, so dass nach entsprechender Kraftbeaufschlagung die jeweiligen Schellenarmenden 13, 14 gegen das Dämpfungselement 20 drücken. Um eine Verbesserung der Kraftübertragung aus den Schellarmen 11, 12 auf das Dämpfungselement 20 zu erreichen, sind die jeweiligen Schellenarmenden 13, 14 derart geformt, dass sie wenigstens bereichsweise entlang der Oberfläche des Dämpfungselements 20 parallel verlaufen. Insbesondere verlaufen damit auch die beiden Schellenarmenden 13, 14 parallel zueinander.

Die jeweils anderen Schellenarmenden 15, 16 des ersten Schellenarms 11 bzw. Schellenarms 12 umfassen jeweils eine Rohrleitung 5, 6. Die Umfassung ist ausführungsgemäß materialschlüssig derart ausgeführt, dass die jeweiligen Schellenarme 11, 12, bzw. Schellenarmenden 15, 16 die Umfangsform der ersten Rohrleitung 5 bzw. zweiten Rohrleitung 6 nachformen. Kommt es nun bspw. aufgrund von Druckschwankungen bei Betrieb der Rohrleitungen zu Schwingungsbewegungen derselben, werden die mechanischen Kräfte von den jeweiligen Rohrleitungen 5, 6 über die Schellenarme 11, 12 in das Dämpfungselement 20 eingeleitet. Da das Dämpfungselement 20 eine Metalldrahtmatte ist, werden die darin befindlichen Metalldrähte mit entsprechenden Bewegungen beaufschlagt, die zu einer Reibung der einzelnen Metalldrähte in dem Dämpfungselement 20 Anlass geben. Aufgrund der Reibungserscheinungen kommt es zum Abbau der mechanischen Energie und Umsetzung in thermische Energie. Eine Dämpfung ist somit erreicht.

Figur 2 zeigt die Ausführungsform des erfindungsgemäßen Rohrsystems 40 bzw. Brennstoffrohrsystems 50 gemäß Figur 1 in einer seitlichen Schnittansicht. Hierbei ist gut zu erkennen, dass der Haltestift 30 sowohl durch Aussparungen an den Schellenarmenden 13, 14 wie auch durch ein Loch in dem Dämpfungselement 20 verläuft. Das Dämpfungselement 20 kann folglich auch bei ungünstigen Schwingungsverhältnissen aus dem Verbund nicht mehr herausfallen, so dass ein sicherer Betrieb erfolgen kann.

Weiterhin zeigt die Schnittansicht, dass sowohl der erste Schellenarm 11 als auch der zweite Schellenarm 12 dazu ausgebildet sind, um mehr als die Hälfte des Umfangs der jeweiligen Rohrleitungen 5, 6 zu verlaufen. Die Rohrleitungen werden folglich in den jeweiligen Schellenarmen 11, 12 sicher gehaltert. Vorliegend ist die Umfassung des jeweiligen Rohrquerschnitts durch den zugehörigen Schellenarm 11, 12, höchstens um 5 % mehr im Vergleich zu einer genau hälftigen Umfassung (d.h. Umfassung um 180° in Umfangsrichtung des Rohrquerschnitts) vorgesehen. Ausführungsgemäß erlaubt dies die jeweiligen Rohrleitungen 5, 6 in die zugehörigen Schellenarmenden 15, 16 einzuklippen und weitgehend sicher zu haltern.

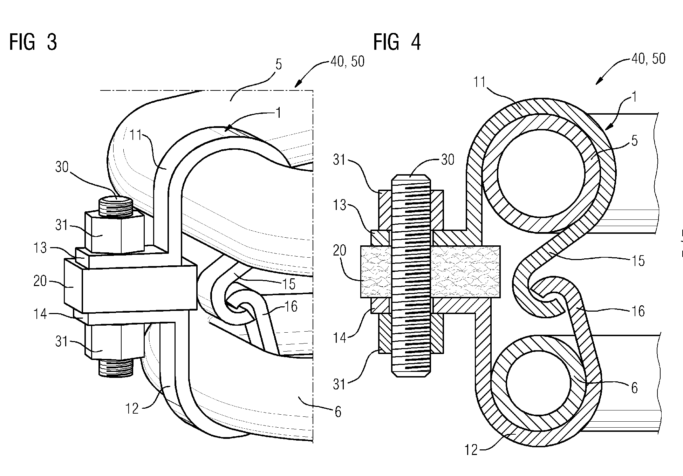

Figur 3 zeigt eine weitere Ausführungsform des erfindungsgemäßen Rohrsystems 40, bzw. Brennstoffrohrsystems 50, welches eine weitere Ausführungsform der erfindungsgemäßen Verbindungsschelle 1 aufweist. Das Brennstoffrohrsystem 50 kann auch ein Teil einer nicht weiter gezeigten Gasturbine sein. Die in Figur 3 gezeigte Verbindungsschelle 1 unterscheidet sich von den in den vorherigen Figuren gezeigten Verbindungschellen 1 dahingehend, dass die nicht über das Dämpfungselement 20 verbundenen Schellenarmenden 15, 16 in einer Hakverbindung miteinander vorliegen. Die Schellenarmenden 15, 16 sind wenigstens zum Teil mit einer Umbördelung versehen, wobei die jeweiligen Umbördelungen der einander zugeordneten Schellenarmenden 15, 16 mit der jeweiligen anderen gegenpassend ausgebildet sind. Infolgedessen können die beiden Umbördelungen ineinander greifen, um eine Hakverbindung auszubilden. Diese Hakverbindung kann leicht durch geeignete mechanischen Handhabung wieder gelöst werden, so dass die gesamte Verbindungsschelle 1 von den Rohrleitungen 5,6 wieder leicht entfernt werden kann.

Figur 4 zeigt eine seitliche Schnittansicht durch die Ausführungsform des in Figur 3 gezeigten Rohrsystems 40, bzw. Brennstoffrohrsystems 50. Hierbei kann die Hakverbindung der beiden Schellenarmenden 15, 16 klar wahrgenommen werden.

Weitere Ausführungsformen ergeben sich aus den Unteransprüchen.

## Patentansprüche

1. Verbindungsschelle (1) zur Verbindung zweier Rohrleitungen (5, 6), umfassend einen ersten Schellenarm (11), welcher dazu ausgebildet ist, wenigstens teilweise um einen Umfang einer ersten Rohrleitung (5) zu verlaufen, und einen zweiten Schellenarm (12), welcher dazu ausgebildet ist, wenigstens teilweise um einen Umfang einer zweiten Rohrleitung (6) zu verlaufen, wobei der erste und zweite Schellenarm (5,6) gedämpft miteinander verbunden sind, und als Dämpfungselement (20) wenigstens eine Metalldrahtmatte vorgesehen ist.

2. Verbindungsschelle nach Anspruch 1,
**dadurch gekennzeichnet, dass** der erste Schellenarm (11) dazu ausgebildet ist, um mehr als die Hälfte des Umfangs der ersten Rohrleitung (5) zu verlaufen und/oder der zweite Schellenarm (12) dazu ausgebildet ist, um mehr als die Hälfte des Umfangs der zweiten Rohrleitung (6) zu verlaufen.

3. Verbindungsschelle nach einem der vorhergehenden Ansprüche,
**dadurch gekennzeichnet, dass** der erste Schellenarm (11) im Bereich eines Schellenarmendes (13) mit dem zweiten Schellenarm (12) ebenfalls im Bereich eines Schellenarmendes (15) verbunden ist, wobei die beiden anderen Schellenarmenden (14, 16) der beiden Schellenarme (11, 12) miteinander unverbunden vorliegen.

4. Verbindungsschelle nach einem der vorhergehenden Ansprüche 1 bis 3,
**dadurch gekennzeichnet, dass** der erste Schellenarm (11) im Bereich eines Schellenarmendes (13) mit dem zweiten Schellenarm (12) ebenfalls im Bereich eines Schellenarmendes (15) verbunden ist, wobei die beiden anderen Schellenarmenden (14, 16) der beiden Schellenarme (11, 12) miteinander in eine lösbare Hakverbindung gebracht sein können.

5. Verbindungsschelle nach einem der vorhergehenden Ansprüche,
**dadurch gekennzeichnet, dass** der erste Schellenarm (11) im Bereich eines Schellenarmendes (13) mit dem zweiten Schellenarm (12) ebenfalls im Bereich eines Schellenarmendes (15) verbunden ist, und wobei die beiden anderen Schellenarmenden (14, 16) der beiden Schellenarme (11, 12) ebenfalls gedämpft miteinander verbunden sind, und als Dämpfungselement wenigstens eine Metalldrahtmatte, insbesondere eine weitere Metalldrahtmatte vorgesehen ist.

6. Verbindungsschelle nach einem der vorhergehenden Ansprüche,
**dadurch gekennzeichnet, dass** der erste Schellenarm (11) im Bereich des einen Schellenarmendes (13) mit dem zweiten Schellenarm (12) ebenfalls im Bereich des einen Schellenarmendes (15) derart verbunden ist, dass die beiden Schellenarme (11, 12) wenigstens bereichsweise mittelbar über das Dämpfungselement (20) miteinander verbunden vorliegen.

7. Verbindungsschelle nach Anspruch 6,
**dadurch gekennzeichnet, dass** die beiden verbundenen Schellenarmenden (13, 15) eine Aussparung aufweisen, durch welche ein Haltestift (30) zur Verbindung beider verläuft.

8. Verbindungsschelle nach Anspruch 7,
**dadurch gekennzeichnet, dass** das Dämpfungselement (20) ebenfalls ein Loch aufweist, durch welches der Haltestift (30) verläuft.

9. Verbindungsschelle nach Anspruch 7 oder 8,
**dadurch gekennzeichnet, dass** der Haltestift (30) als Gewindestift ausgebildet ist, welcher mit den beiden Schellenarmenden (13, 15) verspannt ist.

10. Rohrsystem (40) umfassend wenigstens eine erste Rohrleitung (5) und eine zweite Rohrleitung (6), welche beide mittels einer Verbindungsschelle (1) gemäß einem der vorhergehenden Ansprüche verbunden sind.

11. Brennstoffrohrsystem (50) einer Gasturbinenanlage umfassend wenigstens eine erste Rohrleitung (5) zur Beförderung von Brennstoff und eine zweite Rohrleitung (6) zur Beförderung von Brennstoff, welche beide mittels einer Verbindungsschelle (1) gemäß einem der vorhergehenden Ansprüche 1 bis 9 verbunden sind.

12. Gasturbine umfassend ein Brennstoffrohrsystem (50) gemäß Anspruch 11.
